(19) Europäisches Patentamt
European Patent Office
Office européen des brevets

(11) **EP 1 470 676 B1**

(12) **EUROPÄISCHE PATENTSCHRIFT**

(45) Veröffentlichungstag und Bekanntmachung des Hinweises auf die Patenterteilung:
**30.11.2005 Patentblatt 2005/48**

(51) Int Cl.⁷: **H04L 12/56**, H04L 12/26

(21) Anmeldenummer: 03711817.1

(86) Internationale Anmeldenummer:
**PCT/DE2003/000189**

(22) Anmeldetag: **24.01.2003**

(87) Internationale Veröffentlichungsnummer:
**WO 2003/065644 (07.08.2003 Gazette 2003/32)**

(54) **Verfahren zur Bestimmung der Verkehrslast in einem Kommunikationsnetz mittels Datenpaket-Markierungen**

Method for determining the traffic load in a communication network by means of data packet marking

Procédé de determination de la charge de trafic dans un réseau de communication au moyen de marquage des paquets de données

(84) Benannte Vertragsstaaten:
**AT BE BG CH CY CZ DE DK EE ES FI FR GB GR HU IE IT LI LU MC NL PT SE SI SK TR**

(30) Priorität: **01.02.2002 DE 10204088**
**11.07.2002 DE 10231247**
**07.08.2002 DE 10236108**

(43) Veröffentlichungstag der Anmeldung:
**27.10.2004 Patentblatt 2004/44**

(73) Patentinhaber: **Technische Universität Darmstadt 64289 Darmstadt (DE)**

(72) Erfinder:
• **KARSTEN, Martin**
**Waterloo, Ontario N2L 6B2 (CA)**
• **SCHMITT, Jens**
**68623 Lampertheim (DE)**

(74) Vertreter: **Gornott, Dietmar**
**Zilleweg 29**
**64291 Darmstadt (DE)**

(56) Entgegenhaltungen:
**EP-A- 0 275 678**

• **MARTIN KARSTEN: "QoS Signalling and Charging in a Multi-service Internet using RSVP" DISSERTATIONSSCHRIFT DER TECHNISCHEN UNIVERSITÄT DARMSTADT, [Online] Juli 2000 (2000-07), Seiten i-146, XP002247631 Gefunden im Internet: <URL:ftp://ftp.kom.e-technik.tu-darmstadt.de/pub/papers/Kar00-3-paper.pdf> [gefunden am 2003-07-15]**
• **M. KARSTEN, J. SCHMITT: "Admission Control based on Packet Marking and Feedback Signalling - Mechanisms, Implementation and Experiments" KOM TECHNICAL REPORT, [Online] Mai 2002 (2002-05), Seiten 1-17, XP002247632 Gefunden im Internet: <URL:ftp://ftp.kom.e-technik.tu-darmstadt.de/pub/papers/KS02-5-paper.pdf> [gefunden am 2003-07-14]**
• **V.A. SIRIS ET AL: "Service Differentiation in ECN networks using Weighted Window-Based Congestion Control for various Packet Marking Algorithms" INTERNATIONAL WORKSHOP ON QUALITY OF FUTURE INTERNET SERVICES, [Online] September 2001 (2001-09), Seiten 1-18, XP002247706 Gefunden im Internet: <URL:http://citeseer.nj.nec.com/cache/papers/cs/27131/http:zSzzSzwww.m3i.orgzSzpaperszSzweighted_window_control.pdf/service-differentiation-in-ecn.pdf> [gefunden am 2003-07-15]**
• **K. RAMAKRISHNAN ET AL: "RFC 3168: The Addition of Explicit Congestion Notification (ECN) to IP" IETF NETWORK WORKING GROUP, September 2001 (2001-09), Seiten 1-63, XP002247633 in der Anmeldung erwähnt**

- **LAPSLEY D ET AL: "Random early marking for internet congestion control" SEAMLESS INTERCONECTION FOR UNIVERSAL SERVICES. PROCEEDINGS OF GLOBAL TELECOMMUNICATIONS CONFERENCE. GLOBECOM'99, RIO DE JANEIRO, BRAZIL, 5-9 DEC. 1999 , Bd. 3, 5. Dezember 1999 (1999-12-05), Seiten 1747-1752, XP010373724**

- **RAMANI R ET AL: "Explicit congestion notification (ECN) in TCP over wireless network" PROCEEDINGS OF IEEE INTERNATIONAL CONFERENCE ON PERSONAL WIRELESS COMMUNICATIONS (ICPWC), HYDERABAD, INDIA, 17-20 DEC. 2000 , 17. Dezember 2000 (2000-12-17), Seiten 495-499, XP010534102**

**Beschreibung**

Technisches Gebiet

Die Erfindung betrifft ein Verfahren zur Ermittlung der Last von Netzelementen in einem Kommunikationsnetz mit Netzelementen, insbesondere internen Knoten und Links, und mit Zugangsknoten, wobei die Zugangsknoten aus jeweils einem Eingangsknoten und einem Ausgangsknoten bestehen und von angeschlossenen Endgeräten und/oder anderen Netzen Datenpakete zu- und ableiten, wobei die internen Knoten und Links nach Routing-Algorithmen Pfade bilden, über welche die Datenpakete von einem Eingangsknoten zu einem Ausgangsknoten geleitet werden, und wobei die internen Knoten Datenpakete mit einer lastabhängigen Markierung versehen.

Stand der Technik

Zur Erfassung von Überlastungen bzw. Blokkierungen im Internet ist es durch Kadangode K. Ramakrishnan, Sally Floyd and David Black, IETF RFC 3168: The Addition of Explicit Congestion Notification (ECN) to IP, September 2001 bekanntgeworden, denjenigen Datenpakete, welche mindestens einen internen Knoten durchlaufen haben, bei dem eine Überlastung festgestellt wurde, eine Markierung, bestehend aus einem entsprechend gesetzten Bit, hinzuzufügen. Beim Empfang des Datenpaketes im Ausgangsknoten kann somit festgestellt werden, ob mindestens einer der zur Übertragung dieses Datenpaketes benutzten Knoten und Links hoch belastet oder überlastet ist. Das obengenannte Dokument ist ebenso wie die weiter unten genannten Dokumente der IETF (Internet Engineering Task Force) unter der Adresse http://www.ietf.org/rfc.html verfügbar.

Bei den bekannten Verfahren zur lastabhängigen Markierung wird unter Last nicht die Rechenlast am Vermittlungsknoten verstanden, sondern die Übertragungslast am ausgehenden Link. Dies beinhaltet die implizite Annahme, dass die vermittlungskapazität des Vermittlungsknotens immer ausreichend ist und hohe Last oder Überlast nur entsteht, wenn die Summe des Verkehrs für einen bestimmten Ausgangslink dessen Kapazität überschreitet.

Die bekannten Verfahren zur lastabhängigen Markierung können unterschieden werden in

- Warteschlangen-orientiert (hier wird markiert, wenn die Warteschlange bestimmte Füllhöhen überschreitet),
- Raten-orientiert (hier wird in Abhängigkeit von der Verkehrsrate markiert),
- virtuelle Warteschlangen (hier wird ein virtuelles System mitgeführt, bei dem die Übertragungskapazität kleiner ist als beim realen System; wenn die Warteschlange im virtuellen System bestimmte Füllhöhen überschreitet, wird im realen System markiert).

Durch Karsten M.: "QoS Signalling and Charging in a Multi-service Internet using RSVP", Technische Universität Darmstadt 2000, werden verschiedene Möglichkeiten einer Signalisierung der Dienstqualität (QoS) und Kostenbelastung durch die Benutzung des Resource Reservation Protocols (RSVP) aufgezeigt, welches den Reservierungszustand der Pfade innerhalb des Internets überträgt. Eine Dienstsignalisierung kann dabei auch über ein Unternetz erfolgen, dessen Verrechnung über die Explicit Congestion Notification (ECN) möglich ist.

Mit diesen bekannten Verfahren ist eine näherungsweise Bestimmung der Last jeweils eines Pfades möglich, eine Bestimmung der Last innerhalb des Kommunikationsnetzes, insbesondere in den einzelnen Netzelementen, kann damit jedoch nicht erfolgen.

Aufgabe der vorliegenden Erfindung ist es daher, ein Verfahren zur Bestimmung der Last in einem Kommunikationsnetz anzugeben, bei dem die Last der einzelnen Netzelemente ermittelt wird.

Darstellung der Erfindung

Diese Aufgabe wird bei der Erfindung dadurch gelöst, dass die Ausgangsknoten die aus dem Kommunikationsnetz eintreffenden Datenpakete und die darin enthaltenen Markierungen nach Pfaden getrennt zählen und daraus jeweils einen Wert für die relative Last entlang des jeweiligen Pfades ableiten und dass die von allen Ausgangsknoten abgeleiteten Werte als Parameter in ein Gleichungssystem eingebracht werden, welches das Kommunikationsnetz mit den internen Knoten und Zugangsknoten beschreibt und dessen Lösung die ermittelte relative Last der Netzelemente ergibt.

Das erfindungsgemäße Verfahren hat den Vorteil, dass für Netzelemente, die bei dem Setzen der Markierungen berücksichtigt werden, die Last bestimmt werden kann. Solche Netzelemente sind in erster Linie Knoten und Links, wobei das Verfahren nicht auf diese Netzelemente beschränkt ist, sondern andere Netzelemente, wie beispielsweise Speicher, in das Verfahren einbezogen werden können. Dazu sind keine zusätzlichen Maßnahmen in den Knoten erforderlich, um Lastmeldungen an eine oder mehrere zentrale oder dezentrale Stellen zu senden. Die internen Knoten können also die beispielsweise im Internet vorhandene Struktur im wesentlichen behalten.

Eine Weiterbildung des erfindungsgemäßen Verfahrens besteht darin, dass das Gleichungssystem linear ist. Diese Weiterbildung kann in vorteilhafter Weise derart ausgestaltet sein, dass das Gleichungssystem wie folgt lautet:

$$\sum \ln(1 - m(L_n)) = \ln(1 - M(p_{i,j}))$$

für alle i und j,

wobei $l_n$ der natürliche Logarithmus, $L_n$ die relevante Last eines Netzelementes, m(L) eine Funktion zur Berechnung einer Markierungswahrscheinlichkeit zwischen 0 und 1 für eine relative Last L und $M(p_{i,j})$ die abgeleitete relative Last eines Pfades p zwischen einem Eingangsknoten i und einem Ausgangsknoten j ist und wobei die Summe über alle Netzelemente des jeweiligen Pfades $p_{i,j}$ gebildet wird.

Diese weiterbildung ermöglicht die Lösung der Gleichungen mit einem möglichst geringen Rechenaufwand, so dass die Bestimmung der Last in weitgehend kurzzeitigen Intervallen ohne übermäßigen Rechneraufwand erfolgen kann. Diese Berechnungen können in einer zentralen Stelle erfolgen. Die Durchführung des erfindungsgemäßen Verfahrens ist jedoch auch an entsprechend vielen dezentralen Stellen, beispielsweise in den Zugangsknoten, möglich.

Eine Voraussetzung für eine zuverlässige Bestimmung der Last ist gemäß einer Ausgestaltung dadurch gegeben, dass die Knoten die Häufigkeit der Markierungen nach einer stetig und strengen monoton steigenden Funktion der Last ausführen.

Zur Bestimmung der Last in den jeweiligen Netzelementen, nämlich internen Knoten und Links, kann bei dem erfindungsgemäßen Verfahren vorgesehen sein, dass bei der Ausführung der Markierungen in den Knoten die Last im Knoten zugrundegelegt wird und/oder dass bei der Ausführung der Markierungen die Lasten in den vom Knoten ausgehenden Links berücksichtigt werden.

Eine andere Ausgestaltung des erfindungsgemäßen Verfahrens besteht darin, dass die ermittelte relative Last zur Steuerung von Routing-Algorithmen verwendet wird und dass die ermittelten relativen Lasten in Pfadvorgaben für die von den Eingangsknoten zu sendenden Datenpakete berücksichtigt werden.

Es kann jedoch auch vorgesehen sein, dass die ermittelten relativen Lasten für Auswertungen gespeichert werden.

Üblicherweise übersteigt die Zahl der Pfade die Zahl der Links bzw. Knoten. Da die einzelnen Parameter der Berechnung außerdem mit einem gewissen Fehler behaftet sind (durch die Verzögerung bei der Informationsgewinnung), kann es vorkommen, dass das Gleichungssystem überspezifiziert und nicht direkt lösbar ist. Dieses wird mit einer anderen Ausgestaltung dadurch verhindert, dass die Berechnungen zur Lösung des Gleichungssystems erfolgen, wenn die Zahl der Werte für die relative Last, die von den Ausgangsknoten gemeldet werden, zur eindeutigen Lösung des Gleichungssystems ausreicht.

Damit wird bewirkt, dass jeweils nur die neuesten für die Anzahl der Netzelemente erhaltenen Pfad-Last-Werte zur Berechnung verwendet werden, die linear unabhängig sind und somit alle Netzelemente abdecken.

Außer der Bestimmung der relativen Last im Kommunikationsnetz, insbesondere der relativen Last aller Netzelemente, kann das erfindungsgemäße Verfahren auch zur Bestimmung der Kapazitäten aller Netzelemente angewendet werden. Dazu ist gemäß einer weiteren Ausgestaltung der Erfindung vorgesehen, dass in den Ausgangsknoten ferner die eingehende Datenrate nach Pfaden getrennt ermittelt wird und dass zur Bestimmung der Kapazität der Netzelemente folgende Gleichung angewendet wird,

$$c_n = (\Sigma t_{i,j})/L_n,$$

wobei $c_n$ die Kapazität des Netzelementes, $L_n$ die ermittelte relative Last, $t_{i,j}$ die übertragene Datenrate entlang eines Pfades $p_{i,j}$ ist und die Summe über alle Pfade $p_{i,j}$ gebildet wird.

Bei dem erfindungsgemäßen Verfahren kann zwar die relative Last der einzelnen Netzelemente ermittelt - besser gesagt geschätzt - werden, es ergeben sich jedoch durch unumgehbare Messgenauigkeiten und Übertragungsverzögerungen Fehler. Bei der oben genannten Weiterbildung des erfindungsgemäßen Verfahrens besteht das Gleichungssystem aus einer multiplikativen Verknüpfung von Koeffizienten. Diese Verknüpfung wird durch eine Transformation mit der Logarithmusfunktion in eine additive Verknüpfung umgewandelt, so dass sich zwar ein lineares Gleichungssystem ergibt. Durch die ursprünglich multiplikative Verknüpfung der Koeffizienten können jedoch die genannten Fehler recht groß werden.

Dies wird bei einer anderen Weiterbildung dadurch verhindert,

- dass in den Ausgangsknoten ferner die eingehende Datenrate nach Pfaden getrennt ermittelt wird,
- dass für die einzelnen Netzelemente die ermittelten Datenraten, die für diejenigen Pfade ermittelt wurden, auf denen das jeweilige Netzelement liegt, zu einer Gesamtdatenrate des Netzelements aufaddiert werden,
- dass die Gesamtdatenrate und die relative Last wiederholt ermittelt werden und
- dass die jeweils ermittelte relative Last unter Berücksichtigung der zuvor ermittelten relativen Last und einer Änderung der Gesamtdatenrate korrigiert wird.

Bei der Berechnung der Gesamtdatenrate je Knoten bzw. Link werden die Datenraten aller den Knoten bzw. Link durchlaufenden Pfade addiert. Diese Addition hat den Vorteil, dass sich Fehler nicht fortpflanzen und vergrößern wie im obengenannten Gleichungssystem.

Eine vorteilhafte Ausgestaltung dieser Weiterbildung besteht darin, dass die korrigierte relative Last aus Mittelung der jeweils ermittelten relativen Last und der zuvor ermittelten relativen Last, die mit der Änderung der Gesamtdatenrate bewertet wird, berechnet wird.

Diese Ausgestaltung kann insbesondere derart ausgeführt sein, dass die Berechnung der korrigierten relativen Last mit der Gleichung $L_k = (\alpha \cdot L_a \cdot U_n/U_a + L_n)/(\alpha+1)$ erfolgt,

wobei $L_k$ die korrigierte relative Last, $\alpha$ ein Gewichtsfaktor, der bestimmt, wie stark die Änderung der Gesamtdatenrate berücksichtigt wird, $L_a$ der zuvor ermittelte Wert für die relative Datenrate, $U_n$ die jeweils ermittelte Gesamtdatenrate, $U_a$ die zuvor ermittelte Gesamtdatenrate und $L_n$ die jeweils aktuell ermittelte relative Last ist.

Der Gewichtungsfaktor $\alpha$ ist je nach Voraussetzungen im Einzelnen vom Fachmann festzulegen.

Kurze Beschreibung der Zeichnungen

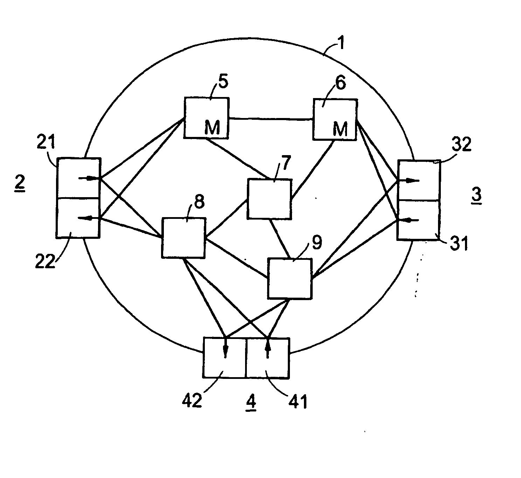

Die Erfindung läßt zahlreiche Ausführungsformen zu. Einige Ausführungsbeispiele sind schematisch in der Zeichnung dargestellt und nachfolgend beschrieben.

Beschreibung der Ausführungsbeispiele

Die Zeichnung stellt schematisch das Kommunikationsnetz 1 mit Zugangsknoten 2, 3, 4 (Gateways) und internen Knoten 5, 6, 7, 8, 9 dar. Die Zugangsknoten 2, 3, 4 verbinden das Kommunikationsnetz 1 mit anderen Netzen und Endgeräten und bestehen jeweils aus einem Eingangsknoten 21, 31, 41 (ingress node) und einen Ausgangsknoten 22, 32, 42 (egress node). Die internen Knoten 5 bis 9 dienen zum Weiterleiten der jeweiligen Datenpakete von einem Eingangsknoten 21, 31, 41 zu einem Ausgangsknoten 22, 32, 42. Welchen Weg dabei jeweils ein Datenpaket nimmt, wird von Routing-Algorithmen bestimmt, die je nach Belastung der einzelnen Knoten veränderbar sind. Die Routing-Algorithmen im einzelnen sind an sich bekannt, und brauchen im Zusammenhang mit der vorliegenden Erfindung nicht näher erläutert zu werden.

Ergibt sich beispielsweise für die internen Knoten 5, 6 ein erhöhtes Verkehrsaufkommen, so werden die von ihnen weitergeleiteten Datenpakete mit einer Markierung M versehen. Solche Markierungen enthalten beispielsweise die Datenpakete, die vom Eingangsknoten 21 über die internen Knoten 5, 6 zum Ausgangsknoten 32 geleitet werden. Sind die internen Knoten 5, 6 sowie deren Verbindungen untereinander und zu den Knoten 21 und 32 überlastet, werden von den vom Eingangsknoten 21 zum Ausgangsknoten 32 zu sendenden Datenpaketen mehr über die internen Knoten 8, 9 geleitet.

Im Ausgangsknoten 32 werden in einem vorgegebenen Zeitabschnitt die in den vom Eingangsknoten 21 erhaltenen Datenpaketen enthaltenen Markierungen M gezählt. Zusätzlich werden die Bytes und die Datenpakete gezählt, die in der vorgegebenen Zeit vom Eingangsknoten 21 zum Ausgangsknoten 32 übertragen werden. Die Anzahl der Markierungen geteilt durch die Anzahl der Datenpakete ergibt ein gutes Maß für die Belastung des Kommunikationsnetzes hinsichtlich der Übertragung zwischen dem Eingangsknoten 21 und dem Ausgangsknoten 32.

In den einzelnen internen Knoten erfolgt die Markierung mit einer Wahrscheinlichkeit m(L), wobei L eine relative Last ist. Für jedes durch einen Pfad verbundene Paar Zugangsknoten (i,j) ist $p_{i,j}$ der verbindende Pfad. Dann berechnet sich die gemessene Last $M(p_{i,j})$ entlang des Pfades $p_{i,j}$ zu

$$M(p_{i,j}) = 1 - ((1-m(L_1)) \cdot (1-m(L_2)) \cdot ... \cdot (1-m(L_n))),$$

wobei n die Anzahl der Knoten jeweils eines Pfades ist und für jeden Pfad $p_{i,j}$ eine Gleichung aufgestellt wird. Dieses Gleichungssystem kann wie folgt umgeformt werden:

$$1 - M(p_{i,j}) = (1-m(L_1)) \cdot (1-m(L_2)) \cdot ... \cdot (1-m(L_n)).$$

Durch Logarithmierung erhält man das lineare Gleichungssystem

$$\sum \ln (1-m(L_n)) = \ln(1-M(p_{i,j}))$$

für alle i und j, bei dem die Funktion $\ln(1-m(L_i))$ durch $y_i$ substituiert werden kann. Falls $m(L_i)$ im Wertebereich zwischen 0 und 1 eine Umkehrfunktion besitzt, kann $\ln(1-m(L_i)) = y_i$ für alle Knoten gelöst werden. Dann kann mit der Lösung des linearen Gleichungssystems die Lösung des Ausgangsgleichungssystems bestimmt werden.

Falls die Berechnung von m(L) auf Link-Last basiert, so sind die Pfade als gerichtet zu betrachten, das heißt beide Richtungen eines Pfades werden separat berücksichtigt. Entsprechend werden beide Richtungen eines Links durch separate Lastzustände $L_n$ abgebildet.

Aus den ermittelten Werten für die relative Last $L_n$ der internen Knoten bzw. Links und der von den Ausgangsknoten ermittelten über die einzelnen Datenpfade $p_{i,j}$ übertragenen Datenraten kann die Kapazität $c_n$ der Knoten bzw. Links wie folgt berechnet werden:

$$c_n = (\Sigma t_{i,j})/L_n,$$

wobei $c_n$ die Kapazität des Netzelementes, $L_n$ die ermittelte relative Last, $t_{i,j}$ die übertragene Datenrate entlang eines Pfades $p_{i,j}$ ist und die Summe über alle Pfade $p_{i,j}$ gebildet wird.

Bei einem anderen Ausführungsbeispiel wird durch Lösung des Gleichungssystems $\sum \ln (1-m(L_n)) =$

ln(1-M($p_{i,j}$)) die relative Last L für die einzelnen Netzelemente (interne Knoten und Links) ermittelt.

Ferner werden aus den an den Ausgangsknoten 22, 32, 42 nach den einzelnen Pfaden getrennt ermittelten Datenraten die Gesamtdatenraten für die einzelnen Netzelemente berechnet. Dies erfolgt durch eine Addition der Datenraten derjenigen Pfade, an denen das jeweilige Netzelement beteiligt ist. Dabei werden jeweils alle Pfade berücksichtigt, die aufgrund der Netzstruktur und der Routing-Algorithmen möglich sind. Als Beispiel ist im folgenden für den internen Knoten 8 folgende Gleichung zu nennen:

$$U(8) = U(21,8,7,6,32) + U(21,8,7,9,32)$$
$$+ U(31, 6, 7, 8, 22) + U(31, 9, 7, 8, 22)$$
$$+ U(21, 8, 42) + U(21, 8, 7, 9, 42)$$
$$+ U(41, 8, 22) + U(41, 9, 7, 8, 22) ...$$

Dabei bedeutet beispielsweise U(21,8,7,6,32) die Datenrate des Pfades zwischen dem Eingangsknoten 21 über die internen Knoten 8, 7, und 6 zum Ausgangsknoten 32.

Sowohl die relative Last L als auch die Gesamtdatenrate werden regelmäßig gemessen - beispielsweise in Zeitabständen von wenigen Sekunden. Bei dem bevorzugten Ausführungsbeispiel werden je Netzelement die jeweils neu ermittelten Werte Ln und Un sowie die vorangegangenen Werte La und Ua zur Bildung der korrigierten Last Lk nach folgender Gleichung verwendet:

$$Lk = (\alpha \cdot La \cdot Un/Ua + Ln)/(\alpha+1).$$

Der Gewichtsfaktor kann vom Fachmann nach folgenden Gesichtspunkten ermittelt werden:

Ist $\alpha$ klein gegenüber 1, ist die wirkung der erfindungsgemäßen Korrektur sehr gering. Allerdings erfolgt auch eine schnelle Anpassung an Änderungen der verfügbaren Kapazität, bei denen sich auch die relative Last schnell ändert, nicht jedoch die Gesamtdatenrate. Je größer $\alpha$ ist, desto stärker wirkt die Fortschreibung der früher ermittelten relativen Last anhand der Änderung der Gesamtdatenrate. Eine Anpassung an Kapazitätsänderungen erfolgt dann langsamer. Im Extremfall, in dem $\alpha$ viel größer als 1 ist, erfolgt praktisch nur eine Fortschreibung auf der Basis von Änderungen der Gesamtdatenrate.

**Patentansprüche**

1. Verfahren zur Ermittlung der Last von Netzelementen in einem Kommunikationsnetz mit Netzelementen, insbesondere internen Knoten und Links, und mit Zugangsknoten, wobei die Zugangsknoten aus jeweils einem Eingangsknoten und einem Ausgangsknoten bestehen und von angeschlossenen Endgeräten und/oder anderen Netzen Datenpakete zu- und ableiten, wobei die internen Knoten und Links nach Routing-Algorithmen Pfade bilden, über welche die Datenpakete von einem Eingangsknoten zu einem Ausgangsknoten geleitet werden, und wobei die internen Knoten Datenpakete mit einer lastabhängigen Markierung versehen, **dadurch gekennzeichnet, dass** die Ausgangsknoten die aus dem Kommunikationsnetz eintreffenden Datenpakete und die darin enthaltenen Markierungen nach Pfaden getrennt zählen und daraus jeweils einen Wert für die relative Last entlang des jeweiligen Pfades ableiten und dass die von allen Ausgangsknoten abgeleiteten Werte als Parameter in ein Gleichungssystem eingebracht werden, welches das Kommunikationsnetz mit den internen Knoten und Zugangsknoten beschreibt und dessen Lösung die ermittelte relative Last der Netzelemente ergibt.

2. Verfahren nach Anspruch 1, **dadurch gekennzeichnet, dass** das Gleichungssystem linear ist.

3. Verfahren nach Anspruch 2, **dadurch gekennzeichnet, dass** das Gleichungssystem wie folgt lautet:

$$\Sigma \ln (1-m(L_n)) = \ln(1-M(p_{i,j}))$$

für alle i und j,
wobei $l_n$ der natürliche Logarithmus, $L_n$ die relevante Last eines Netzelementes, m(L) eine Funktion zur Berechnung einer Markierungswahrscheinlichkeit zwischen 0 und 1 für eine relative Last L und M ($p_{i,j}$) die abgeleitete relative Last eines Pfades p zwischen einem Eingangsknoten i und einem Ausgangsknoten j ist und wobei die Summe über alle Netzelemente des jeweiligen Pfades $p_{i,j}$ gebildet wird.

4. Verfahren nach einem der vorhergehenden Ansprüche, **dadurch gekennzeichnet, dass** die Knoten die Häufigkeit der Markierungen nach einer stetig und streng monoton steigenden Funktion der Last ausführen.

5. Verfahren nach Anspruch 4, **dadurch gekennzeichnet, dass** bei der Ausführung der Markierungen in den Knoten die Last im Knoten zugrundegelegt wird.

6. Verfahren nach Anspruch 4, **dadurch gekennzeichnet, dass** bei der Ausführung der Markierungen die Lasten in den vom Knoten ausgehenden Links berücksichtigt werden.

7. Verfahren nach einem der vorhergehenden Ansprüche, **dadurch gekennzeichnet, dass** die ermittelte relative Last bei der Steuerung von Routing-Algorithmen berücksichtigt wird.

8. Verfahren nach einem der vorhergehenden Ansprüche, **dadurch gekennzeichnet, dass** die ermittelten relativen Lasten in Pfadvorgaben für die von den Eingangsknoten zu sendenden Datenpakete berücksichtigt werden.

9. Verfahren nach einem der vorhergehenden Ansprüche, **dadurch gekennzeichnet, dass** die ermittelten relativen Lasten für Auswertungen gespeichert werden.

10. Verfahren nach einem der vorhergehenden Ansprüche, **dadurch gekennzeichnet, dass** die Berechnungen zur Lösung des Gleichungssystems erfolgen, wenn die Zahl der Werte für die relative Last, die von den Ausgangsknoten gemeldet werden, zur eindeutigen Lösung des Gleichungssystems ausreicht.

11. Verfahren nach einem der vorhergehenden Ansprüche, **dadurch gekennzeichnet, dass** in den Ausgangsknoten ferner die eingehende Datenrate nach Pfaden getrennt ermittelt wird und dass zur Bestimmung der Kapazität der Netzelemente folgende Gleichung angewendet wird,

$$c_n = (\Sigma t_{i,j})/L_n,$$

wobei $c_n$ die Kapazität des Netzelementes, $L_n$ die ermittelte relative Last, $t_{i,j}$ die übertragene Datenrate entlang eines Pfades $p_{i,j}$ ist und die Summe über alle Pfade $p_{i,j}$ gebildet wird.

12. Verfahren nach einem der vorhergehenden Ansprüche,
    **dadurch gekennzeichnet,**

    - **dass** in den Ausgangsknoten ferner die eingehende Datenrate nach Pfaden getrennt ermittelt wird,
    - **dass** für die einzelnen Netzelemente die ermittelten Datenraten, die für diejenigen Pfade ermittelt wurden, auf denen das jeweilige Netzelement liegt, zu einer Gesamtdatenrate des Netzelements aufaddiert werden,
    - **dass** die Gesamtdatenrate und die relative Last wiederholt ermittelt werden und
    - **dass** die jeweils ermittelte relative Last unter Berücksichtigung der zuvor ermittelten relativen Last und einer Änderung der Gesamtdatenrate korrigiert wird.

13. Verfahren nach Anspruch 12, **dadurch gekennzeichnet, dass** die korrigierte relative Last aus Mittelung der jeweils ermittelten relativen Last und der zuvor ermittelten relativen Last, die mit der Änderung der Gesamtdatenrate bewertet wird, berechnet wird.

14. Verfahren nach Anspruch 13, **dadurch gekennzeichnet, dass** die Berechnung der korrigierten relativen Last mit der Gleichung

$$Lk = (\alpha \cdot La \cdot Un/Ua + Ln)/(\alpha+1)$$

erfolgt, wobei Lk die korrigierte relative Last, $\alpha$ ein Gewichtsfaktor, der bestimmt, wie stark die Änderung der Gesamtdatenrate berücksichtigt wird, La der zuvor ermittelte Wert für die relative Datenrate, Un die jeweils ermittelte Gesamtdatenrate, Ua die zuvor ermittelte Gesamtdatenrate und Ln die jeweils aktuell ermittelte relative Last ist.

**Claims**

1. A method for determining the load of network elements in a telecommunications network with network elements in particular internal nodes and links, and with access nodes, whereby each of the access nodes consists of an ingress node and an egress node, and pass data to or from terminal devices and/or other networks whereby the internal nodes and links form paths according to routing algorithms by means of which the data packets are routed from an ingress node to an egress node, and whereby the internal nodes provide data packets with load-dependent marking, **characterized in that** the egress nodes count the data packets from the communications network and the marks contained therein by separate paths, and derive a value for the relative load along a particular path, and that the values derived from all egress nodes are entered as parameters into a equation system that describes the communications network, and its solution produces the determined relative load of the network elements.

2. The method as in Claim 1, **characterized in that** the equation system is linear.

3. The method as in Claim 2, **characterized in that** the equation system is as follows:

$$\Sigma \ln(1 - m(L_n)) = \ln(1 - m(P_{i,j}))$$

for all i and j, whereby ln is the natural logarithm, $L_n$ is the relevant load of an network element, m(L) is a function for calculation of mark probability between 0 and 1 for a relative load L, and $M(P_{i,j})$ is the derived relative load of a path p between an ingress node i and an egress node j, and whereby the sum of all network elements of the specific path $P_{i,j}$ is formed.

4. The method as in one of the prior Claims, **characterized in that** the nodes establish the frequency of marking based on a continuous and strictly monotonic increasing function of the load.

5. The method as in Claim 4, **characterized in that** the implementation of the marks in the nodes is based on the load of the nodes.

6. The method as in Claim 4, **characterized in that** when implementing the marks the loads of the outgoing links from the nodes are taken into account.

7. The method as in one of the prior Claims, **characterized in that** the determined relative load is taken into account when controlling routing algorithms.

8. The method as in one of the prior Claims, **characterized in that** the determined relative load is taken into account in path assignments for data packets to be sent from the ingress nodes.

9. The method as in one of the prior Claims, **characterized in that** the determined relative loads are stored in a buffer for evaluation.

10. The method as in one of the prior Claims, **characterized in that** the calculations to solve the equation system occurs when the number of values for the relative load reported from the egress nodes are sufficient to provide an unambiguous solution to the equation system.

11. The method as in one of the prior Claims, **characterized in that** an expanded embodiment example of the invention provides that the incoming data rate at egress nodes be further determined based on separate paths, and that the following equation be used to determine the capacities of all network elements:

$$C_n = (\Sigma t_{ij}) / L_n,$$

whereby $C_n$ is the capacity of the network element, $L_n$ is the determined relative load, $t_{i,j}$ is the transferred data rate along a path $P_{i,j}$, and the sum over all paths $P_{i,j}$ is formed.

12. The method as in one of the prior Claims, **characterized in that**:

- The incoming data rate in the egress nodes is determined separately by path,
- The determined data rates for the individual network elements determined for those paths along which the particular network element lies are added to the total data rate of the network element,
- The total data rate and the relative load may be determined again, and
- The determined relative load is corrected taking into account the previously-determined relative load and an alteration of the total data rate.

13. The method as in Claim 12, **characterized in that** the corrected relative load is calculated from the median of each determined load and the previously-determined relative load that is weighted with the alteration of the total data rate.

14. The method as in Claim 13, **characterized in that** the calculation of the corrected relative load occurs from the equation

$$Lk = (\alpha \cdot La \cdot Un/Ua + Ln)/ (\alpha + 1),$$

where Lk is the corrected relative load, $\alpha$ is a weighting factor that determines how strong the alteration of the total data rate is taken into account, La is the previously determined value for the relative data rate, Un is the particular determined total data rate, Ua is the previously determined total data rate, and Ln is the actually-determined relative load.

## Revendications

1. Procédé de détermination de la charge d'éléments de réseau dans un réseau de communication comportant des éléments de réseau, en particulier des noeuds et liens internes, et comportant des noeuds d'accès, les noeuds d'accès se composant respectivement d'un noeud d'entrée et d'un noeud de sortie et des paquets de données menant vers et partant de terminaux raccordés et/ou d'autres réseaux, les noeuds et liens internes formant, d'après des algorithmes de routage, des chemins par lesquels les paquets de données sont transmis d'un noeud d'entrée vers un noeud de sortie, et les noeuds internes dotant les paquets de données d'un marquage en fonction de leur charge,
**caractérisé en ce que**
les noeuds de sortie comptent séparément selon les chemins les paquets de données entrants à partir du réseau de communication ainsi que les marquages contenus dans ces paquets et en déduisent respectivement une valeur de charge relative le long du chemin respectif, et les valeurs déduites par tous les noeuds de sortie sont introduites en tant que paramètres dans un système d'équations qui décrit le réseau de communication avec les noeuds internes et les noeuds d'accès et dont la solution donne la charge relative déterminée des éléments de réseau.

2. Procédé selon la revendication 1,
**caractérisé par**
un système d'équations linéaire.

3. Procédé selon la revendication 2,
**caractérisé en ce que**
le système d'équations est le suivant :

$$\Sigma \ln (1-m(L_n)) = \ln(1-M(p_{i,j}))$$

pour tout i et pour tout j, $\ln$ étant le logarithme naturel, $L_n$ la charge pertinente d'un élément de réseau, $m(L)$ une fonction pour le calcul d'une probabilité de marquage comprise entre 0 et 1 pour une charge relative L, et $M(p_{i,j})$ la charge relative déduite d'un chemin p entre un noeud d'entrée i et un noeud de sortie j, la somme étant formée sur tous les éléments de réseau du chemin respectif $p_{i,j}$.

4. Procédé selon l'une des revendications précédentes,
**caractérisé en ce que**
les noeuds effectuent les marquages avec une fréquence suivant une fonction croissante continue et strictement monotone de la charge.

5. Procédé selon la revendication 4,
**caractérisé en ce que**
lors de la réalisation des marquages dans les noeuds, la charge du noeud est prise comme base.

6. Procédé selon la revendication 4,
**caractérisé en ce que**
lors de la réalisation des marquages, les charges dans les liens partant des noeuds sont prises en compte.

7. Procédé selon l'une des revendications précédentes,
**caractérisé en ce que**
la charge relative déterminée lors de la commande d'algorithmes de routage est prise en compte.

8. Procédé selon l'une des revendications précédentes,
**caractérisé en ce que**
les charges relatives déterminées dans les prescriptions de chemins pour les paquets de données devant être envoyés à partir des noeuds d'entrée sont prises en compte.

9. Procédé selon l'une des revendications précédentes,
**caractérisé en ce que**
les charges relatives déterminées pour des exploitations sont stockées.

10. Procédé selon l'une des revendications précédentes,
**caractérisé en ce que**
les calculs de résolution du système d'équations sont effectués lorsque le nombre des valeurs de charge relative signalées par les noeuds de sortie suffit à résoudre de façon univoque le système d'équations.

11. Procédé selon l'une des revendications précédentes,
**caractérisé en ce que**
dans les noeuds de sortie, on détermine en outre séparément selon les chemins le débit de données entrant, et
pour déterminer la capacité des éléments de réseau, on utilise l'équation suivante,

$$C_n = (\Sigma t_{i,j})/L_n,$$

$C_n$ étant la capacité de l'élément réseau, $L_n$ la charge relative déterminée, $t_{i,j}$ le débit de données transmis le long d'un chemin $p_{i,j}$ et la somme est formée sur tous les chemins $p_{i,j}$.

12. Procédé selon l'une des revendications précédentes,
**caractérisé en ce que**

- dans les noeuds de sortie, on détermine en outre séparément selon les chemins le débit de données entrant,
- pour les éléments de réseau individuels, on ajoute à un débit de données total de l'élément de réseau les débits de données qui ont été déterminés pour le chemin sur lequel se trouve l'élément de réseau respectif,
- le débit de données total et la charge relative sont déterminés une nouvelle fois, et
- la charge relative respective déterminée est corrigée en prenant en compte la charge relative déterminée au préalable et une modification du débit de données total.

13. Procédé selon la revendication 12,
**caractérisé en ce que**
la charge relative corrigée est calculée à partir de la moyenne entre la charge relative respective déterminée et de la charge relative déterminée au préalable, évaluée avec la modification du débit de données total.

14. Procédé selon la revendication 13,
    **caractérisé en ce que**
    le calcul de la charge relative corrigée s'effectue à l'aide de l'équation

$$Lk = (\alpha \cdot La \cdot Un/Ua + Ln) / (\alpha+1),$$

où Lk est la charge relative corrigée, $\alpha$ est un facteur de pondération déterminant l'importance de la prise en compte de la modification du débit de données total, La est la valeur déterminée au préalable pour le débit de données relatif, Un est le débit de données total respectif déterminé, Ua est le débit de données total déterminé au préalable et Ln est la charge relative respective effectivement déterminée.